(19) Europäisches Patentamt

European Patent Office

Office européen des brevets

(11) EP 0 648 663 B1

## (12) FASCICULE DE BREVET EUROPEEN

(45) Date de publication et mention
de la délivrance du brevet:
**29.12.1997 Bulletin 1997/52**

(51) Int. Cl.⁶: **B62D 47/02**, B62D 53/04,
B60D 5/00

(21) Numéro de dépôt: **94402240.9**

(22) Date de dépôt: **06.10.1994**

(54) **Dispositif de répartition des charges entre les éléments articulés d'un véhicule de transport en commun**

Vorrichtung zur Lastverteilung zwischen den gelenkig verbundenen Elementen eines Fahrzeugs des öffentlichen Verkehrs

Device for the distribution of the charge between the articulated elements of a public transport vehicle

(84) Etats contractants désignés:
**DE ES GB IT SE**

(30) Priorité: **19.10.1993 FR 9312415**

(43) Date de publication de la demande:
**19.04.1995 Bulletin 1995/16**

(73) Titulaire:
**RENAULT VEHICULES INDUSTRIELS
69003 Lyon (FR)**

(72) Inventeurs:
• **Forey, Charles
F-69150 Decines Charpieu (FR)**

• **Martin, Gérard
F-69008 Lyon (FR)**

(74) Mandataire:
**Ernst-Schonberg, Michel
RENAULT,
Service 02 67,
860, Quai de Stalingrad
92109 Boulogne-Billancourt (FR)**

(56) Documents cités:
**CH-A- 363 896          CH-A- 389 005
US-A- 4 705 288**

Printed by Xerox (UK) Business Services
2.15.7/3.4

## Description

L'invention concerne un dispositif de répartition des charges entres les éléments articulés d'un véhicule de transport en commun, et notamment entre les essieux de ces éléments.

L'invention concerne plus particulièrement un tel dispositif adapté à un véhicule de transport en commun, comportant au moins un élément avant à deux essieux et un élément arrière porteur du groupe motopropulseur et dont lesdits éléments sont réunis par un dispositif d'articulation protégé par un soufflet.

L'invention s'applique en particulier aux véhicules urbains articulés dans lesquels le groupe motopropulseur est situé dans l'extrémité arrière de l'élément arrière du véhicule dans le but d'obtenir un espace de transport de voyageurs plus important. Un exemple de tel véhicule est décrit dans la publication FR-A-2 424 842.

La publication FR-A-2 457 187 décrit un dispositif de stabilisation entre les éléments articulés d'un véhicule, tels qu'un élément tracteur et sa remorque, qui s'oppose au mouvement de tangage entre lesdits éléments. Ce dispositif utilise un vérin amortisseur dont les extrémités sont articulées autour de deux rotules respectivement solidaires de l'élément tracteur et de la remorque.

La publication CH-A-363.896 décrit un dispositif de transfert temporaire de la charge de l'essieu d'une remorque à l'essieu moteur du véhicule tracteur conforme au préambule de la revendication.

Un tel dispositif permet une diminution de l'amplitude de l'affaissement de l'arrière de l'élément tracteur dans certaines situations d'utilisation (cassis, mauvaises routes) et un transfert temporaire de la charge de la remorque sur le tracteur pour sortir le véhicule de conditions d'adhérence exceptionnellement faibles.
Néanmoins sur un véhicule de transport en commun dans lequel le groupe motopropulseur est placé dans l'élément arrière, la charge de l'essieu de la remorque ne peut donc pas être transférée sur l'essieu de l'élément avant.

L'invention a pour objet un dispositif qui permet d'effectuer en permanence un transfert de charge de l'essieu de l'élément arrière vers les essieux de l'élément avant du véhicule articulé dans le but de respecter la charge maximale admise sur l'élément arrière.

L'invention a également pour objet d'améliorer la sécurité de comportement de l'ensemble articulé du véhicule lors des manoeuvres de braquage en diminuant le risque de glissement des roues latérales sous l'effet de la poussée motrice de l'essieu arrière. Ce risque augmente avec la disproportion des charges supportées par les essieux avant et arrière. L'invention a donc pour objet de réduire cette différence de charges.

L'invention a encore pour objet un dispositif qui permet de s'opposer au mouvement de tangage entre les éléments articulés d'un véhicule de transport en commun.

Les différents objectifs de l'invention sont atteints conformément à la caractéristique de la revendication.

D'autres caractéristiques et avantages de l'invention apparaîtront à la lecture de la description d'un exemple de réalisation du dispositif de répartition des charges entre les éléments articulés d'un véhicule de transport en commun en référence au dessin annexé dans lequel :

- la figure 1 est une représentation schématique d'un véhicule de transport en commun à éléments articulés équipé du dispositif de répartition de charges,

- la figure 2 est une vue de dessus du dispositif de répartition de charges.

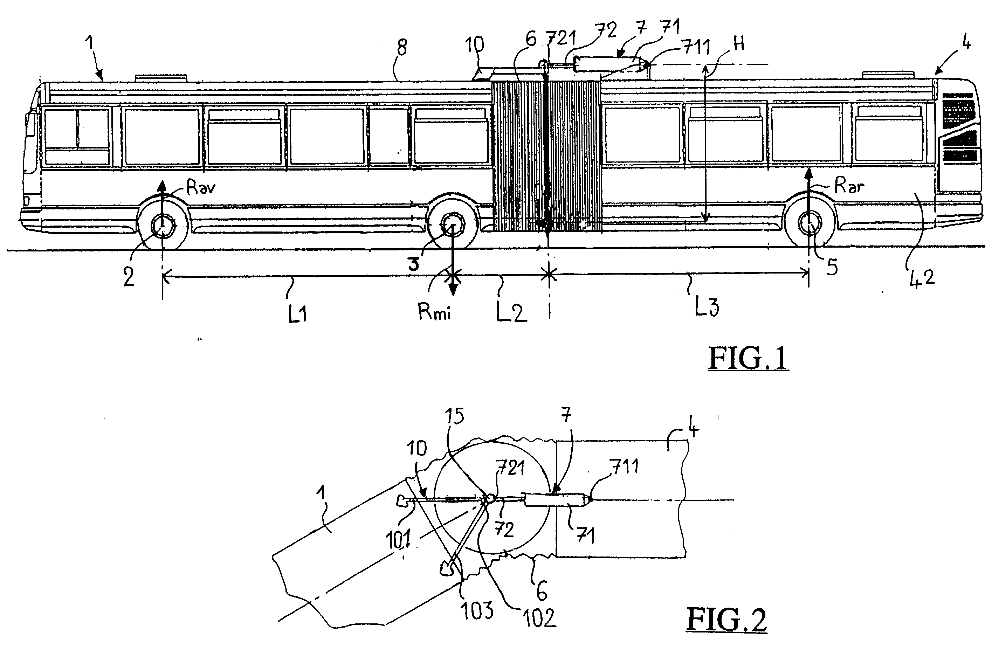

Selon la figure 1, le véhicule de transport en commun comprend un élément avant 1 à deux essieux 2 et 3 que l'on désignera respectivement dans la suite de la description par essieu avant 2 et essieu milieu 3, et un élément arrière 4 à un essieu désigné comme l'essieu arrière 5.

Les éléments avant 1 et arrière 4 sont réunis par un dispositif d'articulation non représenté, tel qu'une articulation à rotule, protégé par un soufflet 6. Le soufflet 6 protège également un passage d'intercommunication entre les habitacles des éléments 1 et 4 du véhicule, comme le montre la figure 1.

L'élément arrière 4 porte à son extrémité arrière 42 le groupe motopropulseur non représenté du véhicule.

Selon la figure 2, un vérin 7 est constitué de manière connue en soi par un corps 71 et une tige 72. Il est fixé sur le toit 8 du véhicule d'une part par l'extrémité libre 711 du corps 71 du vérin 7 fixée sur une zone médiane d'un premier élément du véhicule, tel que l'élément arrière 4, et d'autre part par l'extrémité libre 721 de la tige 72 du vérin 7 fixée sur un prolongement 10 d'un deuxième élément du véhicule, tel que l'élément avant 1, de sorte que le soufflet 6 s'étend sous le vérin 7.

Le prolongement 10 de l'élément avant 1 est constitué par un support en V dont les branches 101 et 103 sont fixées rigidement sur ledit élément avant 1, et dont la pointe 102 est située sensiblement à l'aplomb de l'axe d'articulation 15 des éléments avant 1 et arrière 4 du véhicule et constitue le point d'ancrage de l'extrémité 721 de la tige 72 du vérin 7.

La description de la fixation du vérin 7 présentée ci-dessus n'est pas limitative, en effet on peut également envisager une fixation du vérin pour laquelle l'extrémité libre 711 du corps 71 du vérin 7 serait fixée sur l'élément avant 1 et l'extrémité libre 721 de la tige 72 du vérin 7 fixée sur un prolongement de l'élément arrière 4 semblable à celui décrit ci-dessus.

Le vérin 7 qui peut être à fonctionnement hydraulique ou pneumatique est à effet simple et sa chambre est alimentée à partir d'un réservoir de fluide d'un circuit de commande de servitudes du véhicule.

On utilisera de préférence un circuit de commande relatif à une fonction de "base" telle que la suspension pour assurer l'alimentation continue du dispositif de répartition des charges.

Une pression hydraulique constante dans le cas d'un vérin hydraulique ou la pression d'air comprimé constante dans le cas d'un vérin pneumatique permettent d'obtenir un effort de rappel constant entre les parties supérieures du véhicule en créant un couple de force de rappel autour de l'axe d'articulation 15 des deux éléments articulés 1 et 4, qui se décompose sur chaque essieu comme suit :

Les flèches Rav, Rar et Rmi représentées à la figure 1 représentent la modification des forces qui s'appliquent respectivement sur les essieux avant 2, arrière 5 et milieu 3 sous l'influence du dispositif.

Les valeurs de ces forces sont respectivement donnés par les relations :

$$Rav = F.H.(1 + L2 / L3) / L1 ,$$

$$Rar = F.H / L3 ,$$

$$Rmi = F.H.(1 + (L1+L2) / L3) / L1 ,$$

dans lesquels :

H désigne la distance entre la rotule d'articulation des deux éléments 1, 4 et la tige 72 du vérin 7,
L1 désigne la distance entre l'essieu avant 2 et l'essieu milieu 3,
L2 désigne la distance entre l'essieu milieu 3 et l'axe d'articulation 15 des deux éléments 1, 4 du véhicule,
L3 désigne la distance entre l'essieu arrière 5 et l'axe d'articulation 15 des deux éléments 1, 4 du véhicule.

Comme le montre les relations ci-dessus, le dispositif selon l'invention permet un délestage de valeur Rar de l'essieu arrière 5 et Rav de l'essieu avant 2 et une charge de valeur Rmi de l'essieu milieu 3.
Ainsi ce transfert de charges aboutit à un meilleur équilibrage des éléments 1 et 4 du véhicule.

## Revendications

1. Dispositif de répartition des charges entre les éléments articulés d'un véhicule de transport en commun, comportant au moins un élément avant (1) à deux essieux (2, 3) et un élément arrière (4) porteur du groupe motopropulseur, lesdits éléments (1, 4) étant réunis par un dispositif d'articulation protégé par un soufflet (6) dans lequel un vérin (7) constitué de manière connue en soi par un corps (71) et une tige (72), est fixé sur le toit (8) du véhicule de sorte que le soufflet (6) soit localisé sous le vérin (7), et que l'extrémité libre (711) du corps (71) du vérin (7) soit fixée au premier élément (4) du véhicule et l'extrémité libre (721) de la tige (72) du vérin (7) soit fixée sur un prolongement (10) du deuxième élément (1) du véhicule, caractérisé par le fait que le prolongement (10) du deuxième élément (1) est constitué par un support en V dont les branches (101, 103) sont fixées rigidement sur ledit élément (1), et dont la pointe (102) est située sensiblement à l'aplomb de l'axe d'articulation (15) du premier et du deuxième éléments (4, 1) et constitue le point d'ancrage de l'extrémité libre (721) de la tige (72) du vérin (7).

2. Dispositif selon la revendication 1, caractérisé par le fait que le vérin (7) est à simple effet et que son alimentation est assurée à partir d'un réservoir de fluide d'un circuit de commande de servitudes du véhicule.

## Claims

1. A device for distributing loads between the articulated members of a public transport vehicle, comprising at least one front member (1) with two axles (2, 3) and a rear member (4) bearing the drive unit, these members (1, 4) being connected by an articulation device protected by a bellows (6) in which a jack (7) formed, in a manner known per se, by a body (71) and a rod (72) is secured on the roof (8) of the vehicle such that the bellows (6) is located below the jack (7), and wherein the free end (711) of the body (71) of the jack (7) is secured to the first member (4) of the vehicle and the free end (721) of the rod (72) of the jack (7) is secured to a prolongation (10) of the second member (1) of the vehicle, characterised in that the prolongation (10) of the second member (1) is formed by a V-shaped support whose branches (101, 103) are secured rigidly to this member (1) and whose point (102) is located substantially plumb with the axis of articulation (15) of the first and second members (4, 1) and forms the anchoring point of the free end (721) of the rod (72) of the jack (7).

2. A device as claimed in claim 1, characterised in that the jack (7) is single-acting and in that its supply is ensured from a fluid tank of a control circuit for the vehicle equipment.

## Patentansprüche

1. Vorrichtung zur Lastverteilung zwischen den gelenkig verbundenen Elementen eines Fahrzeugs des Öffentlichen Verkehrs, das mindestens ein vorderes Element (1) mit zwei Achsen (2, 3) und ein hinteres, eine Motorantriebsgruppe tragendes Element (4) enthalt, wobei diese Elemente (1, 4) durch eine von einem Schutzbalg (6) geschützt Gelenkvorrichtung miteinander verbunden sind, wobei ein an sich nach bekannter Art und Weise aus einem Gehäuse (71) und einer Kolbenstange (71) bestehender Zylinder (7) derart auf dem Dach (8) des Fahrzeugs befestigt ist, daß sich der Schutzbalg (6) unter dem Zylinder (7) befindet und das freie Ende (711) des Gehäuses (71) des Zylinders (7) auf dem ersten Element (4) des Fahrzeugs befestigt ist und das freie Ende (721) der Kolbenstange (72) des Zylinders (7) auf einer Verlängerung (10) des zweiten Elementes (1) des Fahrzeugs befestigt ist, dadurch gekennzeichnet, daß die Verlängerung (10) des zweiten Elementes (1) einen V-förmigen Träger enthält, dessen Zweige (101, 103) auf diesem Element (1) starr befestigt sind und dessen Spitze (102) ungefähr lotrecht über der Gelenkachse (15) des ersten und des zweiten Elements (4, 1) des Fahrzeugs gerichtet ist und den Verankerungspunkt des freien Endes (721) der Kolbenstange (72) des Zylinders (7) bildet.

2. Vorrichtung nach Anspruch 1, dadurch gekennzeichnet, daß der Zylinder (7) einfach wirkend ist und daß seine Beschickung von einem Flüssigkeitsbehälter eines Steuerkreises des Fahrzeugs gewährleistet ist.

**FIG.1**

**FIG.2**

EP 0 648 663 B1